# EUROPEAN PATENT APPLICATION

(11) **EP 4 503 416 A1**
(43) Date of publication of application: **05.02.2025**
(21) Application number: 24189017.7
(22) Date of filing: 16.07.2024
(51) Int. Cl.: H02M 1/38, H02M 3/335, H02M 1/32

(54) **POWER CONVERSION APPARATUS AND ENERGY STORAGE APPARATUS**

(30) Priority: 31.07.2023 CN 202310958462
(71) Applicant: Huawei Digital Power Technologies Co., Ltd., Shenzhen, Guangdong 518043 (CN)
(72) Inventor: CHEN, Baoguo, Shenzhen, 518043 (CN); HE, Ye, Shenzhen, 518043 (CN); ZHENG, Rongsen, Shenzhen, 518043 (CN); LAN, Shangrong, Shenzhen, 518043 (CN)
(74) Representative: Gill Jennings & Every LLP

(57) **Abstract**

This application provides a power conversion apparatus and an energy storage apparatus. The power conversion apparatus may include a direct current-direct current conversion circuit and a controller. The direct current-direct current conversion circuit may include a full-bridge circuit, the full-bridge circuit includes a first bridge arm and a second bridge arm that are connected in parallel, and each of the bridge arms includes an upper bridge arm switch and a lower bridge arm switch that are connected in series. The controller is coupled to each of the bridge arms, and the controller controls turn-on/off of the upper bridge arm switch and the lower bridge arm switch of each of the bridge arms based on a voltage of a first connection point between the upper bridge arm switch and the lower bridge arm switch in the first bridge arm and a voltage of a second connection point between the upper bridge arm switch and the lower bridge arm switch in the second bridge arm, to reduce a possibility that bridge arm straight-through occurs.

## Description

### TECHNICAL FIELD

This application relates to the field of electronic technologies, and in particular, to a power conversion apparatus and an energy storage apparatus.

### BACKGROUND

A lithium battery has features such as high energy density and long cycle life, and therefore is widely used in the field of photovoltaic energy storage and electric vehicles. A battery needs to perform energy conversion by using a power conversion circuit. A circuit topology formed by a bridge arm, such as a half-bridge circuit and a full-bridge circuit, is widely used in the power conversion circuit. If straight-through occurs on an upper transistor and a lower transistor that form the bridge arm, the entire bridge arm is short-circuited, and a large current is generated. This causes damage or even explosion of switching transistors. Currently, there are two main manners of preventing bridge arm straight-through: (1) A current of a switching transistor is detected, and an operation of stopping sending a PWM driver gating signal is driven after the current overflows. (2) Logical interlocking is performed on drive signals of an upper transistor and a lower transistor. A short-circuit current flows through the switching transistor for a specific period of time in a manner of detecting the short-circuit current of the switching transistor. In this case, the operation of stopping sending a PWM driver gating signal may not be performed in time, and the switching transistor may still be damaged.

### SUMMARY

This application provides a power conversion apparatus and an energy storage apparatus, to avoid a bridge arm straight-through problem.

According to a first aspect, an embodiment of this application provides a power conversion apparatus. The power conversion apparatus includes a direct current-direct current conversion circuit and a controller. The direct current-direct current conversion circuit includes a full-bridge circuit, the full-bridge circuit includes a first bridge arm and a second bridge arm that are connected in parallel, and each of the bridge arms includes an upper bridge arm switch and a lower bridge arm switch that are connected in series. The controller is coupled to each of the bridge arms. The controller may control turn-on/off of the upper bridge arm switch and the lower bridge arm switch of each of the bridge arms based on a voltage of a first connection point between the upper bridge arm switch and the lower bridge arm switch in the first bridge arm and a voltage of a second connection point between the upper bridge arm switch and the lower bridge arm switch in the second bridge arm. For example, when it is determined that the voltage of the first connection point and the voltage of the second connection point meet a specified control requirement, it indicates that a short-circuit problem does not occur on some bridge arm switches, and corresponding bridge arm switches may be driven according to a PWM drive signal sent by a control chip. To be specific, the corresponding bridge arm switches are controlled to switch between being turned on and being turned off. When it is determined that the voltage of the first connection point or the voltage of the second connection point does not meet the specified control requirement, it indicates that a short-circuit problem is very likely to occur in a bridge arm switch, and the corresponding bridge arm switch needs to be turned off. To be specific, the corresponding bridge arm switch is controlled to be turned off, to reduce a possibility that bridge arm straight-through occurs.

In some embodiments, when it is determined that at least one of following is met: the voltage of the first connection point is less than the first threshold and the voltage of the second connection point is greater than the second threshold, the controller determines that at least one of the lower bridge arm switch of the first bridge arm and the upper bridge arm switch of the second bridge arm is short-circuited, and controls both the upper bridge arm switch of the first bridge arm and the lower bridge arm switch of the second bridge arm to be turned off, to avoid a possibility that bridge arm straight-through occurs.

In some embodiments, when it is determined that the voltage of the first connection point is greater than the first threshold and the voltage of the second connection point is less than the second threshold, the controller determines that the lower bridge arm switch of the first bridge arm and the upper bridge arm switch of the second bridge arm are not short-circuited, and controls, based on a PWM drive signal sent by the control chip, the upper bridge arm switch of the first bridge arm and the lower bridge arm switch of the second bridge arm to be simultaneously turned on or turned off. To be specific, at a moment, the upper bridge arm switch of the first bridge arm and the lower bridge arm switch of the second bridge arm are controlled to be simultaneously turned on, and at a next moment, the upper bridge arm switch of the first bridge arm and the lower bridge arm switch of the second bridge arm are controlled to be simultaneously turned off.

In some embodiments, when it is determined that at least one of following is met: the voltage of the second connection point is less than the first threshold and the voltage of the first connection point is greater than the second threshold, the controller determines that at least one of the upper bridge arm switch of the first bridge arm and the lower bridge arm switch of the second bridge arm is short-circuited, and controls both the upper bridge arm switch of the second bridge arm and the lower bridge arm switch of the first bridge arm to be turned off, to avoid a possibility that bridge arm straight-through occurs.

In some embodiments, when it is determined that the voltage of the second connection point is greater than the first threshold and the voltage of the first connection point is less than the second threshold, the controller determines that the upper bridge arm switch of the first bridge arm and the lower bridge arm switch of the second bridge arm are not short-circuited, and controls, based on a PWM drive signal sent by the control chip, the upper bridge arm switch of the second bridge arm and the lower bridge arm switch of the first bridge arm to be simultaneously turned on or turned off. To be specific, at a moment, the upper bridge arm switch of the second bridge arm and the lower bridge arm switch of the first bridge arm are controlled to be simultaneously turned on, and at a next moment, the upper bridge arm switch of the second bridge arm and the lower bridge arm switch of the first bridge arm are controlled to be simultaneously turned off.

According to a second aspect, an embodiment of this application provides another power conversion apparatus. The power conversion apparatus includes a direct current-direct current conversion circuit and a controller. The direct current-direct current conversion circuit includes a half-bridge circuit, the half-bridge circuit includes a first bridge arm, and the first bridge arm includes an upper bridge arm switch and a lower bridge arm switch that are connected in series. The controller is coupled to the first bridge arm. The controller may control turn-on/off of the upper bridge arm switch and the lower bridge arm switch of the first bridge arm based on a voltage of a first connection point between the upper bridge arm switch and the lower bridge arm switch in the first bridge arm. For example, when it is determined that the voltage of the first connection point meets a specified control requirement, it indicates that a short-circuit problem does not occur on some bridge arm switches, and corresponding bridge arm switches may be driven according to a PWM drive signal sent by a control chip. To be specific, the corresponding bridge arm switches are controlled to be turned on or turned off. When it is determined that the voltage of the first connection point does not meet the specified control requirement, it indicates that a short-circuit problem is very likely to occur in a bridge arm switch, and the corresponding bridge arm switch needs to be turned off. To be specific, the corresponding bridge arm switch is controlled to be turned off, to reduce a possibility that bridge arm straight-through occurs.

In some embodiments, when it is determined that the voltage of the first connection point is less than a first threshold, the controller determines that the lower bridge arm switch of the first bridge arm is short-circuited, and controls the upper bridge arm switch to be turned off, to avoid a possibility that bridge arm straight-through occurs.

In some embodiments, when it is determined that the voltage of the first connection point is greater than the first threshold, the controller determines that the lower bridge arm switch of the first bridge arm is not short-circuited, and controls, based on a PWM drive signal sent by the control chip, the upper bridge arm switch to switch between being turned on and being turned off. To be specific, at a moment, the upper bridge arm switch is controlled to be turned on, and at a next moment, the upper bridge arm switch is controlled to be turned off.

In some embodiments, when it is determined that the voltage of the first connection point is greater than a second threshold, the controller determines that the lower bridge arm switch of the first bridge arm is short-circuited, and controls the lower bridge arm switch to be turned off, to avoid a possibility that bridge arm straight-through occurs.

In some embodiments, when it is determined that the voltage of the first connection point is less than the second threshold, the controller determines that the lower bridge arm switch of the first bridge arm is not short-circuited, and controls, based on a PWM drive signal sent by the control chip, the lower bridge arm switch to switch between being turned on and being turned off. To be specific, at a moment, the lower bridge arm switch is controlled to be turned on, and at a next moment, the lower bridge arm switch is controlled to be turned off.

According to a third aspect, an embodiment of this application provides another power conversion apparatus. The power conversion apparatus includes a direct current-direct current conversion circuit and a controller. The direct current-direct current conversion circuit includes an LLC circuit, the LLC circuit includes a first bridge arm and a second bridge arm that are connected in series, and each of the bridge arms includes an upper bridge arm switch and a lower bridge arm switch that are connected in series. The controller is coupled to each of the bridge arms. The controller may control turn-on/off of the upper bridge arm switch and the lower bridge arm switch of the first bridge arm based on a voltage of a first connection point between the upper bridge arm switch and the lower bridge arm switch in the first bridge arm. The controller may control turn-on/off of the upper bridge arm switch and the lower bridge arm switch of the second bridge arm based on a voltage of a second connection point between the upper bridge arm switch and the lower bridge arm switch in the second bridge arm. For example, when it is determined that the voltage of the first connection point or the voltage of the second connection point meets a specified control requirement, it indicates that a short-circuit problem does not occur on some bridge arm switches, and corresponding bridge arm switches may be driven according to a PWM drive signal sent by a control chip. To be specific, the corresponding bridge arm switches are controlled to switch between being turned on and being turned off. When it is determined that the voltage of the first connection point or the voltage of the second connection point does not meet the specified control requirement, it indicates that a short-circuit problem is very likely to occur in a bridge arm switch, and the corresponding bridge arm switch needs to be turned off. To be specific, the corresponding bridge arm switch is controlled to be turned off, to reduce a possibility that bridge arm straight-through occurs.

In some embodiments, when it is determined that the voltage of the first connection point is less than a first threshold, the controller determines that the lower bridge arm switch of the first bridge arm is short-circuited, and controls the upper bridge arm switch of the first bridge arm to be turned off, to avoid a possibility that bridge arm straight-through occurs.

In some embodiments, when it is determined that the voltage of the first connection point is greater than the first threshold, the controller determines that the lower bridge arm switch of the first bridge arm is not short-circuited, and controls, based on a PWM drive signal sent by the control chip, the upper bridge arm switch of the first bridge arm to switch between being turned on and being turned off. To be specific, at a moment, the upper bridge arm switch of the first bridge arm is controlled to be turned on, and at a next moment, the upper bridge arm switch of the first bridge arm is controlled to be turned off.

In some embodiments, when it is determined that the voltage of the first connection point is greater than a second threshold, the controller determines that the upper bridge arm switch of the first bridge arm is short-circuited, and controls the lower bridge arm switch of the first bridge arm to be turned off, to avoid a possibility that bridge arm straight-through occurs.

In some embodiments, when it is determined that the voltage of the first connection point is less than the second threshold, the controller determines that the upper bridge arm switch of the first bridge arm is not short-circuited, and controls, based on a PWM drive signal sent by the control chip, the lower bridge arm switch of the first bridge arm to switch between being turned on and being turned off. To be specific, at a moment, the lower bridge arm switch of the first bridge arm is controlled to be turned on, and at a next moment, the lower bridge arm switch of the first bridge arm is controlled to be turned off.

In some embodiments, when it is determined that the voltage of the second connection point is less than a third threshold, the controller determines that the lower bridge arm switch of the second bridge arm is short-circuited, and controls the upper bridge arm switch of the second bridge arm to be turned off, to avoid a possibility that bridge arm straight-through occurs.

In some embodiments, when it is determined that the voltage of the second connection point is greater than the third threshold, the controller determines that the lower bridge arm switch of the second bridge arm is not short-circuited, and controls, based on a PWM drive signal sent by the control chip, the upper bridge arm switch of the second bridge arm to switch between being turned on and being turned off. To be specific, at a moment, the upper bridge arm switch of the second bridge arm is controlled to be turned on, and at a next moment, the upper bridge arm switch of the second bridge arm is controlled to be turned off.

In some embodiments, when it is determined that the voltage of the second connection point is greater than a fourth threshold, the controller determines that the upper bridge arm switch of the second bridge arm is short-circuited, and controls the lower bridge arm switch of the second bridge arm to be turned off, to avoid a possibility that bridge arm straight-through occurs.

In some embodiments, when it is determined that the voltage of the second connection point is less than the fourth threshold, the controller determines that the upper bridge arm switch of the second bridge arm is not short-circuited, and controls, based on a PWM drive signal sent by the control chip, the lower bridge arm switch of the second bridge arm to switch between being turned on and being turned off. To be specific, at a moment, the lower bridge arm switch of the second bridge arm is controlled to be turned on, and at a next moment, the lower bridge arm switch of the second bridge arm is controlled to be turned off.

According to a fourth aspect, an embodiment of this application further provides an energy storage apparatus, including a battery control unit, a plurality of battery packs, and a plurality of power conversion apparatuses according to any one of the first aspect to the third aspect. The plurality of battery packs are disposed in parallel, and each of the battery packs is connected to the battery control unit after being connected in series to one power conversion apparatus. The power conversion apparatus includes a primary-side circuit, a primary-side winding, a secondary-side winding, and a secondary-side circuit that are sequentially coupled. The secondary-side circuit is coupled to the battery pack. The secondary-side circuit may be a full-bridge circuit, a half-bridge circuit, or an LLC circuit. The controller in the power conversion apparatus may collect a voltage of a connection point between an upper bridge arm switch and a lower bridge arm switch in a bridge arm of the secondary-side circuit, and control turn-on/off of the upper bridge arm switch and the lower bridge arm switch in the corresponding bridge arm based on the voltage of the connection point, to reduce a possibility that bridge arm straight-through occurs, and prevent a battery pack short-circuit.

### BRIEF DESCRIPTION OF DRAWINGS

FIG. 1 is a schematic of a frame structure of a photovoltaic system;
FIG. 2 is a schematic of a structure of an energy storage apparatus;
FIG. 3 is a schematic of a structure of a power conversion apparatus;
FIG. 4 is a schematic of a specific circuit structure of a power conversion apparatus according to this application;
FIG. 5 is a schematic of specific circuit control of a full-bridge circuit in a power conversion apparatus according to this application;
FIG. 6 is a schematic of a specific circuit structure of a drive circuit in a power conversion apparatus according to this application;
FIG. 7a is a schematic of a specific circuit structure of a full-bridge circuit in a power conversion apparatus according to this application;
FIG. 7b is a schematic of another specific circuit structure of a full-bridge circuit in a power conversion apparatus according to this application;
FIG. 7c is a schematic of another specific circuit structure of a full-bridge circuit in a power conversion apparatus according to this application;
FIG. 8 is a schematic of specific circuit control of a half-bridge circuit in a power conversion apparatus according to this application;
FIG. 9a is a schematic of a specific circuit structure of a half-bridge circuit in a power conversion apparatus according to this application;
FIG. 9b is a schematic of another specific circuit structure of a drive circuit in a power conversion apparatus according to this application;
FIG. 10a is a schematic of another specific circuit structure of a half-bridge circuit in a power conversion apparatus according to this application;
FIG. 10b is a schematic of another specific circuit structure of a drive circuit in a power conversion apparatus according to this application;
FIG. 11 is a schematic of other specific circuit control of a three-level LLC circuit in a power conversion apparatus according to this application; and
FIG. 12 is a schematic of another specific circuit structure of a drive circuit in a power conversion apparatus according to this application.

### Reference numerals:

110: photovoltaic array; 120: power converter; 130: power grid; 140: external load; 150: energy storage apparatus; 100: DC-DC conversion circuit; 200: controller; 300: battery; 101: primary-side circuit; Pr: primary-side winding; Sr: secondary-side winding; 102: secondary-side circuit; 103: resonance circuit; 210: first sampling circuit; 220: second sampling circuit; 230: logic circuit; 240: drive circuit; 231: first comparison circuit; 232: second comparison circuit; 233: third comparison circuit; 234: fourth comparison circuit; 235: first AND logic circuit; 236: second AND logic circuit; 237: third AND logic circuit; 238: fourth AND logic circuit; P1: first connection point; P2: second connection point; TA: first bridge arm; TB: second bridge arm; TC: capacitor branch; Q1 and Q3: upper bridge arm switches; Q2 and Q4: lower bridge arm switches; T1: first switching transistor; T2: second switching transistor; T3: third switching transistor; T4: fourth switching transistor; L: inductor; C: capacitor; C1: first capacitor; C2: second capacitor.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. It should be noted that, in the description of this application, "at least one" means one or more, and "a plurality of" means two or more. In view of this, in embodiments of the present invention, "a plurality of" may also be understood as "at least two". The term "and/or" is an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that, in the description of this application, terms "first" and "second" are only used to distinguish the purpose of the description, but cannot be understood as indication or implication of relative importance, and cannot be understood as an indication or implication of a sequence.

It should be noted that the "connection" in embodiments of this application may be understood as an electric connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C. In some scenarios, the "connection" may also be understood as coupling, for example, electromagnetic coupling between two inductors. In conclusion, the connection between A and B enables transmission of electric energy between A and B.

The following clearly the technical solutions in embodiments of this application with reference to accompanying drawings in embodiments of this application. First, an application scenario of a power conversion apparatus provided in embodiments of this application is described. The power conversion apparatus provided in embodiments of this application may be used in a scenario such as a photovoltaic system or an energy storage apparatus.

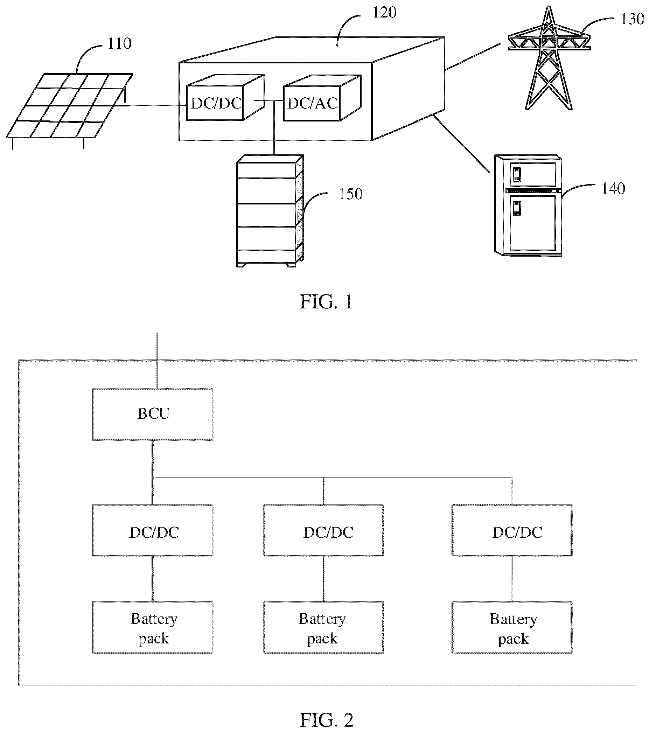

FIG. 1 is an example of a schematic of a frame structure of a photovoltaic system. Refer to FIG. 1. The photovoltaic system includes a photovoltaic array 110, a power converter 120, an energy storage apparatus 150, and a power grid 130 or an external load 140. The power converter 120 may integrate a DC/DC conversion circuit and a DC/AC conversion circuit. The energy storage apparatus 150 may be located between the DC/DC conversion circuit and the DC/AC conversion circuit. After the DC/DC conversion circuit performs boost or buck conversion on electric energy generated by the photovoltaic array 110, electric energy obtained after the conversion may be used to charge the energy storage apparatus 150. When the electric energy generated by the photovoltaic array 110 is insufficient to supply power to the power grid 130 or the external load 140, electric energy stored in the energy storage apparatus 150 may be transmitted to the power grid 130 or the external load 140 through the DC/AC conversion circuit in the power converter 120. In addition, the energy storage apparatus 150 may further receive power supply from the power grid 130, and an alternating current output by the power grid 130 is converted into a direct current by using the DC/AC conversion circuit, and then is transmitted to the energy storage apparatus 150, so as to charge the energy storage apparatus 150.

FIG. 2 is an example schematic of a structure of an energy storage apparatus. Refer to FIG. 2. The energy storage apparatus 150 may include a battery control unit (battery control unit, BCU), a plurality of battery packs, and a plurality of power conversion apparatuses. The power conversion apparatus includes a direct current (direct current, DC)-direct current conversion circuit (also referred to as a DC/DC conversion circuit or a DC-DC conversion circuit for short). The plurality of battery packs are disposed in parallel, and each of the battery pack is connected to the battery control unit after being connected to a DC-DC conversion circuit in series. The DC-DC conversion circuit may perform power conversion on electric energy stored in the battery pack and then output electric energy obtained after the conversion, or perform power conversion on external power supply and then store, in the battery pack, external power supply obtained after the conversion.

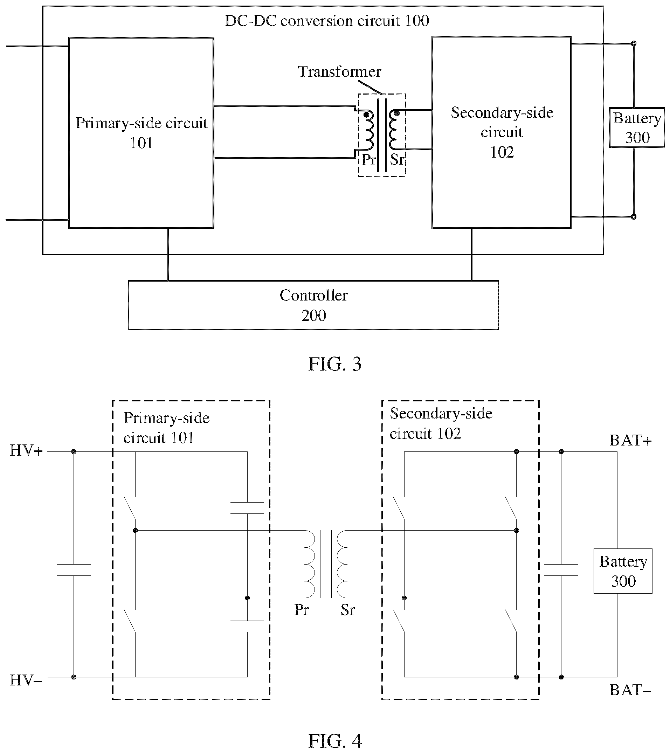

FIG. 3 is an example schematic of a structure of a power conversion apparatus. Refer to FIG. 3. In addition to the DC-DC conversion circuit 100, the power conversion apparatus may further include a controller 200. The DC-DC conversion circuit 100 may include a primary-side circuit 101, a secondary-side circuit 102, and a transformer. The transformer usually includes a primary-side winding Pr and a secondary-side winding Sr. The primary-side circuit 101, the primary-side winding Pr, the secondary-side winding Sr, and the secondary-side circuit 102 may be sequentially coupled. Optionally, a battery 300 (which may also be referred to as a battery pack) is usually coupled to the secondary-side circuit 102. Alternatively, the battery 300 may be coupled to the primary-side circuit 101. An example in which the battery 300 is coupled to the secondary-side circuit 102 is used for description below.

The controller 200 is connected to the primary-side circuit 101 and the secondary-side circuit 102. The controller 200 may generate a plurality of control signals, for example, a pulse width modulation (pulse width modulation, PWM) signal, to control the primary-side circuit 101 and the secondary-side circuit 102 to work. For example, the controller 200 may be any one of a microprocessor (microcontroller unit, MCU), a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), or the like inside the conversion circuit, or may be any one or a combination of another programmable logic device, a transistor logic device, or a hardware component. During specific implementation, a plurality of power conversion apparatuses may share a same controller 200, or may be separately provided with different controllers 200. In addition, the controller 200 may be independently disposed, or may be integrated into another component, for example, may be integrated into a BCU.

In some application scenarios, the controller 200 may control the DC-DC conversion circuit 100 to convert high-voltage direct-current electric energy into low-voltage direct-current electric energy, and output the low-voltage direct-current electric energy to the battery 300, to charge the battery 300. In the DC-DC conversion circuit 100, the primary-side circuit 101 may receive high-voltage direct-current electric energy, and the secondary-side circuit 102 may output low-voltage direct-current electric energy. Therefore, the primary-side circuit 101 may also be generally referred to as a high-voltage side circuit, and the secondary-side circuit 102 may also be generally referred to as a low-voltage side circuit. In some other application scenarios, in the power conversion apparatus provided in this embodiment of this application, the controller 200 may control the DC-DC conversion circuit 100 to perform voltage conversion on direct-current electric energy stored in the battery 300, and then output electric energy obtained after the conversion, to discharge the battery 300.

FIG. 4 is an example schematic of a specific circuit structure of a power conversion apparatus according to this application. Refer to FIG. 4. Aprimary-side circuit 101 and a secondary-side circuit 102 in the power conversion apparatus may be implemented by using a full-bridge circuit topology, a half-bridge circuit topology, an LLC circuit topology, or another circuit topology. In FIG. 4, an example in which the primary-side circuit 101 is a half-bridge circuit topology and the secondary-side circuit 102 is a full-bridge circuit topology is used for description. A full-bridge circuit topology and a half-bridge circuit topology may each include a bridge arm formed by a plurality of switches or switching transistors connected in series. Specifically, one bridge arm may include an upper bridge arm switch and a lower bridge arm switch that are connected in series. The full-bridge circuit topology includes two bridge arms connected in parallel, and the half-bridge circuit topology includes one bridge arm and a capacitor connected in parallel. The upper bridge arm switch is usually located at an upper end of the bridge arm and is connected to a high-potential voltage terminal, and the lower bridge arm switch is usually located at a lower end of the bridge arm and is connected to a low-potential voltage terminal. A voltage value of the high-potential voltage terminal is higher than a voltage value of the low-potential voltage terminal. For example, the high-potential voltage terminal may be an input voltage terminal Vin, and the low-potential voltage terminal may be a ground voltage. In addition, in the secondary-side circuit 102, a high-potential voltage terminal connected to an upper bridge arm switch may be a positive terminal BAT+ of a battery 300, and a low-potential voltage terminal connected to a lower bridge arm switch may be a negative terminal BAT- of the battery 300. In the primary-side circuit 101, a high-potential voltage terminal connected to an upper bridge arm switch may be a high-voltage positive input terminal HV+, and a low-potential voltage terminal connected to a lower bridge arm switch may be a high-voltage negative input terminal HV-.

In this embodiment of this application, switches or switching transistors in the primary-side circuit 101 and the secondary-side circuit 102 may be one or more of a plurality of types of switches such as a relay, a metal-oxide semiconductor field-effect transistor (metal-oxide semiconductor field-effect transistor, MOSFET), a bipolar junction transistor (bipolar junction transistor, BJT), and an insulated gate bipolar transistor (insulated gate bipolar transistor, IGBT). Details are not listed in this embodiment of this application. A switching transistor may include a first electrode, a second electrode, and a control electrode, and the control electrode is configured to control turn-on/off of the switching transistor. When the switching transistor is turned on, a current can be transmitted between the first electrode and the second electrode of the switching transistor. When the switching transistor is turned off, no current can be transmitted between the first electrode and the second electrode of the switching transistor. The MOSFET is used as an example. A control electrode of a switching transistor is a gate, a first electrode of the switching transistor may be a source of the switching transistor, and a second electrode may be a drain of the switching transistor. Alternatively, the first electrode may be a drain of the switching transistor, and the second electrode may be a source of the switching transistor. The switching transistor and the switch in this embodiment of this application may be in an on state driven by a signal whose level is a first level, and may be in an off state driven by a signal whose level is a second level. The first level may be a high level, and the second level may be a low level. Alternatively, the first level is a low level, and the second level is a high level.

The controller 200 is coupled to each bridge arm switch. The controller 200 may collect a voltage of a connection point between an upper bridge arm switch and a lower bridge arm switch in a bridge arm, and control turn-on/off of the upper bridge arm switch and the lower bridge arm switch in the corresponding bridge arm based on the voltage of the connection point. For example, when it is determined that the voltage of the connection point meets a specified control requirement, it indicates that there is no short-circuited switch in the bridge arm, and then a corresponding bridge arm switch may be driven according to a PWM drive signal sent by a control chip. To be specific, the corresponding bridge arm switch is controlled to switch between being turned on and being turned off. When it is determined that the voltage of the first connection point does not meet the specified control requirement, it indicates that there is very likely a short-circuited switch in the bridge arm, and the corresponding bridge arm switch needs to be turned off. To be specific, the corresponding bridge arm switch is controlled to be turned off, to reduce a possibility that bridge arm straight-through occurs. Specifically, the controller 200 may perform the foregoing sampling control only on the primary-side circuit 101, to reduce a possibility that bridge-arm straight-through occurs in the primary-side circuit 101. Alternatively, the controller 200 may perform the foregoing sampling control only on the secondary-side circuit 102, to reduce a possibility that bridge-arm straight-through occurs in the secondary-side circuit 102. Alternatively, the controller 200 may separately perform the foregoing sampling control on the primary-side circuit 101 and the secondary-side circuit 102, to reduce a possibility that bridge-arm straight-through occurs in the primary-side circuit 101 and the secondary-side circuit 102.

The following describes, by using several specific embodiments, how the controller 200 controls a working mode of a corresponding bridge arm switch based on a voltage of a connection point of a bridge arm for different circuit topologies, to reduce a possibility that bridge arm straight-through occurs.

### Embodiment 1

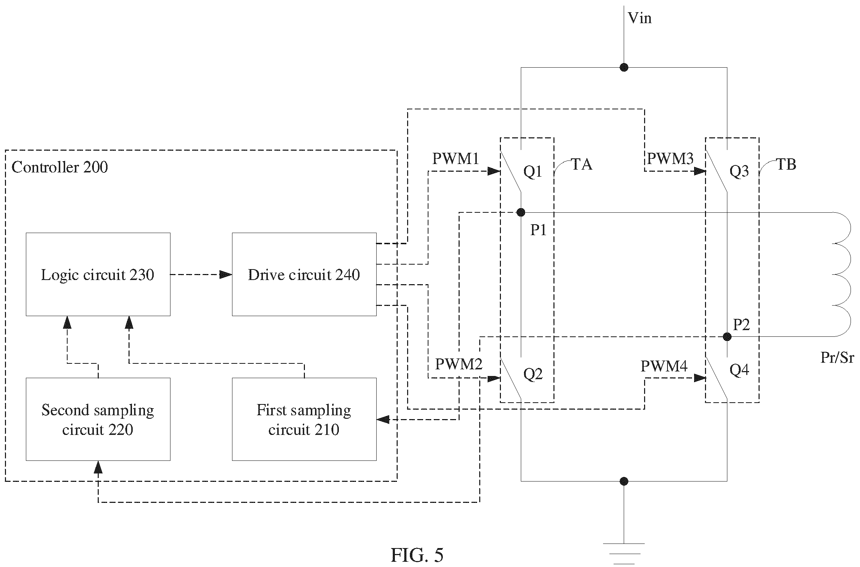

FIG. 5 is an example schematic of specific circuit control of a full-bridge circuit in a power conversion apparatus according to this application. Refer to FIG. 5. The full-bridge circuit may include a first bridge arm TA and a second bridge arm TB that are connected in parallel. The first bridge arm TA may include an upper bridge arm switch Q1 and a lower bridge arm switch Q2 that are connected in series. A first connection point P1 between the upper bridge arm switch Q1 and the lower bridge arm switch Q2 may be referred to as a midpoint of the first bridge arm TA. The second bridge arm TB may include an upper bridge arm switch Q3 and a lower bridge arm switch Q4 that are connected in series. A second connection point P2 between the upper bridge arm switch Q3 and the lower bridge arm switch Q4 may be referred to as a midpoint of the second bridge arm TB. The upper bridge arm switches Q1 and Q3 are both connected to an input voltage terminal Vin, and the lower bridge arm switches Q2 and Q4 are grounded after being connected. When the secondary-side circuit 102 uses the foregoing full-bridge circuit, a positive terminal BAT+ of the battery may be used as an input voltage terminal Vin, a negative terminal BAT- of the battery may be grounded, a first terminal of a secondary-side winding Sr is coupled to the midpoint of the first bridge arm TA, namely, the first connection point P1, and a second terminal of the secondary-side winding Sr is coupled to the midpoint of the second bridge arm TB, namely, the second connection point P2. When the primary-side circuit 101 uses the foregoing full-bridge circuit, a high-voltage positive input terminal HV+ may be used as an input voltage terminal Vin, a high-voltage negative input terminal HV- may be grounded, a first terminal of a primary-side winding Pr is coupled to the midpoint of the first bridge arm TA, namely, the first connection point P1, and a second terminal of the primary-side winding Pr is coupled to the midpoint of the second bridge arm TB, namely, the second connection point P2.

The controller 200 may be coupled to the first bridge arm TA and the second bridge arm TB of the full-bridge circuit. The controller 200 controls turn-on/off of the upper bridge arm switch Q1 of the first bridge arm TA and the lower bridge arm switch Q4 of the second bridge arm TB and turn-on/off of the upper bridge arm switch Q3 of the second bridge arm TB and the lower bridge arm switch Q2 of the first bridge arm TA based on a voltage of the first connection point P1 between the upper bridge arm switch Q1 and the lower bridge arm switch Q2 in the first bridge arm TA and a voltage of the second connection point P2 between the upper bridge arm switch Q3 and the lower bridge arm switch Q4 in the second bridge arm TB.

Specifically, the controller 200 may sample the voltages of the first connection point P1 and the second connection point P2. When it is determined that the voltage of the first connection point P1 is greater than the first threshold V1 and the voltage of the second connection point P2 is less than the second threshold V2, the controller determines that the lower bridge arm switch Q2 of the first bridge arm TA and the upper bridge arm switch Q3 of the second bridge arm TB are not short-circuited, and controls, based on a PWM drive signal sent by the control chip, the upper bridge arm switch Q1 of the first bridge arm TA and the lower bridge arm switch Q4 of the second bridge arm TB to simultaneously switch between being turned on and being turned off. To be specific, at a moment, the upper bridge arm switch Q1 of the first bridge arm TA and the lower bridge arm switch Q4 of the second bridge arm TB are controlled to be simultaneously turned on, and at a next moment, the upper bridge arm switch Q1 of the first bridge arm TA and the lower bridge arm switch Q4 of the second bridge arm TB are controlled to be simultaneously turned off. When it is determined that the voltage of the second connection point P2 is greater than the first threshold V1 and the voltage of the first connection point P1 is less than the second threshold V2, the controller determines that the upper bridge arm switch Q1 of the first bridge arm TA and the lower bridge arm switch Q4 of the second bridge arm TB are not short-circuited, and controls, based on a PWM drive signal sent by the control chip, the lower bridge arm switch Q2 of the first bridge arm TA and the upper bridge arm switch Q3 of the second bridge arm TB to simultaneously switch between being turned on and being turned off. To be specific, at a moment, the lower bridge arm switch Q2 of the first bridge arm TA and the upper bridge arm switch Q3 of the second bridge arm TB are controlled to be simultaneously turned on, and at a next moment, the lower bridge arm switch Q2 of the first bridge arm TA and the upper bridge arm switch Q3 of the second bridge arm TB are controlled to be simultaneously turned off. When it is determined that at least one of following is met: the voltage of the first connection point P1 is less than the first threshold V1 and the voltage of the second connection point P2 is less than the second threshold V2, the controller determines that at least one of the lower bridge arm switch Q2 of the first bridge arm TA and the upper bridge arm switch Q3 of the second bridge arm TB is short-circuited, and may control both the upper bridge arm switch Q1 of the first bridge arm TA and the lower bridge arm switch Q4 of the second bridge arm TB to be turned off, to avoid a possibility that bridge arm straight-through occurs. When it is determined that at least one of following is met: the voltage of the second connection point P2 is less than the first threshold V1 and the voltage of the first connection point P1 is greater than the second threshold V2, the controller determines that at least one of the upper bridge arm switch Q1 of the first bridge arm TA and the lower bridge arm switch Q4 of the second bridge arm TB is short-circuited, and may control both the lower bridge arm switch Q2 of the first bridge arm TA and the upper bridge arm switch Q3 of the second bridge arm TB to be turned off, to avoid a possibility that bridge arm straight-through occurs. The first threshold V1 and the second threshold V2 may each be between 0 and Vin, in other words, 0< V1 <Vin and 0<V2<Vin.

Refer to FIG. 5. The controller 200 may specifically include a first sampling circuit 210, a second sampling circuit 220, a logic circuit 230, and a drive circuit 240. The first sampling circuit 210 may sample the voltage of the first connection point P1 and output the voltage to the logic circuit 230, and the second sampling circuit 220 may sample the voltage of the second connection point P2 and output the voltage to the logic circuit 230. When it is determined that the voltage of the first connection point P1 is greater than the first threshold V1 and the voltage of the second connection point P2 is less than the second threshold V2, the logic circuit 230 may output a first enable signal to the drive circuit 240 based on a received first drive signal output by the chip, where the first enable signal is a necessary condition for turning on the upper bridge arm switch Q1 of the first bridge arm TA and the lower bridge arm switch Q4 of the second bridge arm TB. Alternatively, when it is determined that the voltage of the second connection point P2 is greater than the first threshold V1 and the voltage of the first connection point P1 is less than the second threshold V2, the logic circuit 230 may output a second enable signal to the drive circuit 240 based on a received second drive signal output by the chip, where the second enable signal is a necessary condition for turning on the lower bridge arm switch Q2 of the first bridge arm TA and the upper bridge arm switch Q3 of the second bridge arm TB. After receiving the first enable signal, the drive circuit 240 may generate first PWM signals PWM1 and PWM4 and output the first PWM signals to the upper bridge arm switch Q1 of the first bridge arm TA and the lower bridge arm switch Q4 of the second bridge arm TB respectively. After receiving the second enable signal, the drive circuit 240 may generate second PWM signals PWM2 and PWM3 and output the second PWM signals to the lower bridge arm switch Q2 of the first bridge arm TA and the upper bridge arm switch Q3 of the second bridge arm TB respectively.

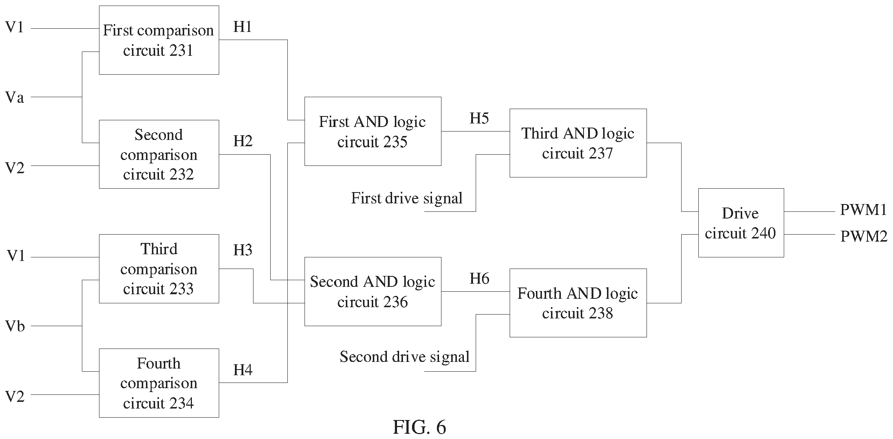

FIG. 6 is an example schematic of a specific circuit structure of a drive circuit in a power conversion apparatus according to this application. Refer to FIG. 6. The logic circuit 230 may specifically include a first comparison circuit 231, a second comparison circuit 232, a third comparison circuit 233, a fourth comparison circuit 234, a first AND logic circuit 235, a second AND logic circuit 236, a third AND logic circuit 237, and a fourth AND logic circuit 238. The first comparison circuit 231 outputs a first high level signal H1 when it is determined that the voltage Va of the first connection point P1 is greater than the first threshold V1. The second comparison circuit 232 outputs a second high level signal H2 when it is determined that the voltage Va of the first connection point P1 is less than the second threshold V2. The third comparison circuit 233 outputs a third high level signal H3 when it is determined that the voltage Vb of the second connection point P2 is greater than the first threshold V1. The fourth comparison circuit 234 outputs a fourth high level signal H4 when it is determined that the voltage Vb of the second connection point P2 is less than the second threshold V2. When the first AND logic circuit 235 receives the first high level signal H1 and the fourth high level signal H4 at the same time, it indicates that the voltage Va of the first connection point P1 is greater than the first threshold V1 and the voltage Vb of the second connection point P2 is less than the second threshold V2, and a fifth high level signal H5 is output. When the second AND logic circuit 236 receives the second high level signal H2 and the third high level signal H3 at the same time, it indicates that the voltage Va of the first connection point P1 is less than the second threshold V2 and the voltage Vb of the second connection point P2 is greater than the first threshold V1, and a sixth high level signal H6 is output. After receiving the fifth high level signal H5, the third AND logic circuit 237 may perform AND logic with the first drive signal output by the chip, to generate and output the first enable signal, so that the drive circuit 240 may generate the first PWM signal PWM1 after receiving the first enable signal, to drive the upper bridge arm switch Q1 of the first bridge arm TA and the lower bridge arm switch Q4 of the second bridge arm TB simultaneously. After receiving the sixth high level signal H6, the fourth AND logic circuit 238 may perform AND logic with the second drive signal output by the chip, to generate and output the second enable signal, so that the drive circuit 240 may generate the second PWM signal PWM2 after receiving the second enable signal, to drive the lower bridge arm switch Q2 of the first bridge arm TA and the upper bridge arm switch Q3 of the second bridge arm TB simultaneously.

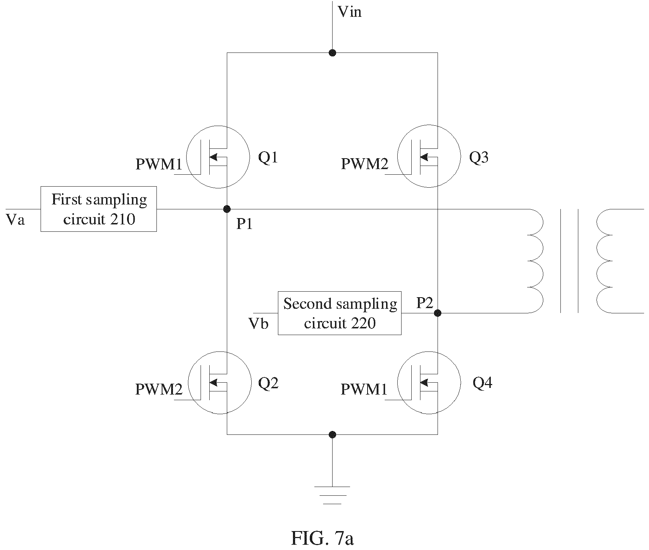

FIG. 7a is an example schematic of a specific circuit structure of a full-bridge circuit in a power conversion apparatus according to this application. Refer to FIG. 7a. In some embodiments of this application, bridge arm switches Q1, Q2, Q3, and Q4 in the full-bridge circuit may each be implemented by using one switching transistor. In addition, the full-bridge circuit may be directly connected to a primary-side winding (or a secondary-side winding).

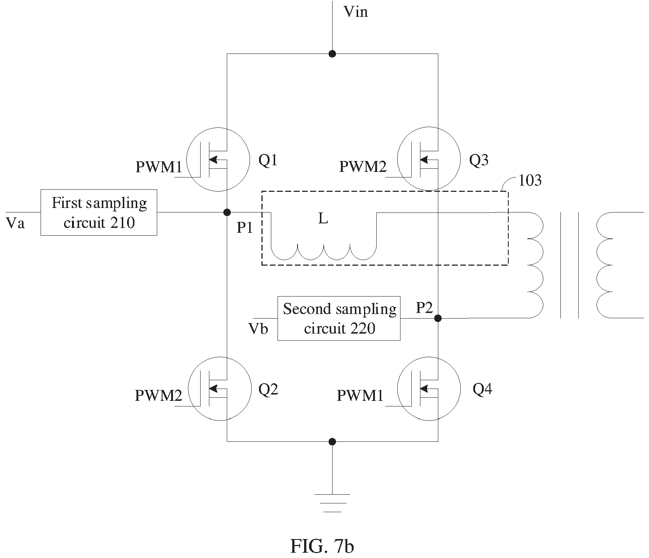

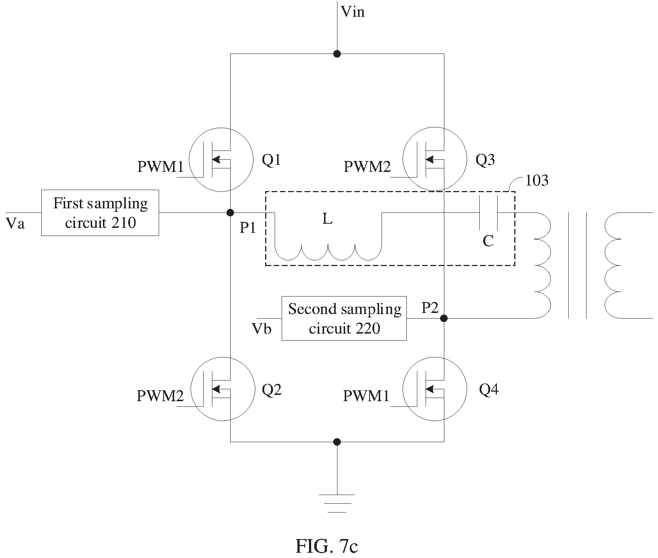

FIG. 7b is an example schematic of another specific circuit structure of a full-bridge circuit in a power conversion apparatus according to this application. FIG. 7c is an example schematic of another specific circuit structure of a full-bridge circuit in a power conversion apparatus according to this application. Refer to FIG. 7b and FIG. 7c. In some other embodiments of this application, a resonance circuit 103 may be further disposed between the full-bridge circuit and the primary-side winding (or the secondary-side winding). The resonance circuit 103 may be coupled between a first end of the primary-side winding (or the secondary-side winding) and a first connection point P1, or the resonance circuit 103 may be coupled between a second end of the primary-side winding (or the secondary-side winding) and a second connection point P2. Refer to FIG. 7b. In some embodiments of this application, the resonance circuit 103 may include an inductor L, so that the inductor L and the full-bridge circuit form a phase-shifted full-bridge circuit. Refer to FIG. 7c. In some other embodiments of this application, the resonance circuit 103 may further include a capacitor C connected in series to the inductor L, so that the inductor L, the capacitor C, and the full-bridge circuit form an LLC/CLLC full-bridge circuit.

### Embodiment 2

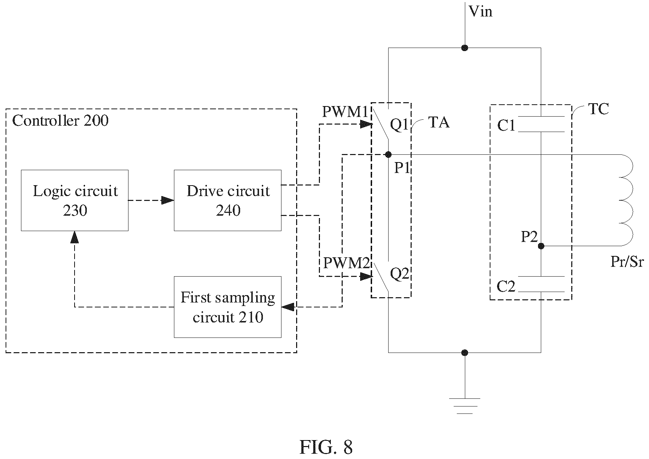

FIG. 8 is an example schematic of specific circuit control of a half-bridge circuit in a power conversion apparatus according to this application. FIG. 8 is an example schematic of specific circuit control of a half-bridge circuit in a power conversion apparatus according to this application. Refer to FIG. 8. The half-bridge circuit may include a first bridge arm TA. The first bridge arm TA may include an upper bridge arm switch Q1 and a lower bridge arm switch Q2 that are connected in series. A first connection point P1 between the upper bridge arm switch Q1 and the lower bridge arm switch Q2 may be referred to as a midpoint of the first bridge arm TA. The upper bridge arm switch Q1 is connected to an input voltage terminal Vin, and the lower bridge arm switch Q2 is grounded. The half-bridge circuit may further include a capacitor branch TC connected in parallel to the first bridge arm TA, and the capacitor branch TC may include a first capacitor C1 and a second capacitor C2 that are connected in series. A second connection point P2 between the first capacitor C1 and the second capacitor C2 may be referred to as a midpoint of the capacitor branch TC. When the secondary-side circuit 102 uses the foregoing half-bridge circuit, a positive terminal BAT+ of the battery may be used as an input voltage terminal Vin, a negative terminal BAT- of the battery may be grounded, a first terminal of a secondary-side winding Sr is coupled to the midpoint of the first bridge arm TA, namely, the first connection point P1, and a second terminal of the secondary-side winding Sr is coupled to the midpoint of the capacitor branch TC, namely, the second connection point P2. When the primary-side circuit 101 uses the foregoing half-bridge circuit, a high-voltage positive input terminal HV+ may be used as an input voltage terminal Vin, a high-voltage negative input terminal HV- may be grounded, a first terminal of a primary-side winding Pr is coupled to the midpoint of the first bridge arm TA, namely, the first connection point P1, and a second terminal of the primary-side winding Pr is coupled to the midpoint of the capacitor branch TC, namely, the second connection point P2.

The controller 200 may be coupled to the first bridge arm TA of the half-bridge circuit. The controller 200 controls turn-on/off of the upper bridge arm switch Q1 and the lower bridge arm switch Q2 of the first bridge arm TA based on a voltage of the first connection point P1 between the upper bridge arm switch Q1 and the lower bridge arm switch Q2 in the first bridge arm TA.

Specifically, the controller 200 may sample the voltage of the first connection point P1. When it is determined that the voltage of the first connection point P1 is greater than the first threshold V1, the controller determines that the lower bridge arm switch Q2 of the first bridge arm TA is not short-circuited, and may control, based on a PWM drive signal sent by the control chip, the upper bridge arm switch Q1 of the first bridge arm TA to switch between being turned on and being turned off. To be specific, at a moment, the upper bridge arm switch Q1 of the first bridge arm TA is controlled to be turned on, and at a next moment, the upper bridge arm switch Q1 of the first bridge arm TA is controlled to be turned off. When it is determined that the voltage of the first connection point P1 is less than the second threshold V2, the controller determines that the lower bridge arm switch Q2 of the first bridge arm TA is not short-circuited, and may control, based on a PWM drive signal sent by the control chip, the lower bridge arm switch Q2 of the first bridge arm TA to switch between being turned on and being turned off. To be specific, at a moment, the lower bridge arm switch Q2 of the first bridge arm TA is controlled to be turned on, and at a next moment, the lower bridge arm switch Q2 of the first bridge arm TA is controlled to be turned off. When it is determined that the voltage of the first connection point P1 is less than the first threshold V1, the controller determines that the lower bridge arm switch Q2 of the first bridge arm TA is short-circuited, and may control the upper bridge arm switch Q1 of the first bridge arm TA to be turned off, to avoid a possibility that bridge arm straight-through occurs. When it is determined that the voltage of the first connection point P1 is greater than the second threshold V2, the controller determines that the lower bridge arm switch Q2 of the first bridge arm TA is short-circuited, and may control the lower bridge arm switch Q2 of the first bridge arm TA to be turned off, to avoid a possibility that bridge arm straight-through occurs. The first threshold V1 and the second threshold V2 may each be between 0 and Vin, in other words, 0<V1<Vin and 0<V2<Vin.

Refer to FIG. 8. The controller 200 may specifically include a first sampling circuit 210, a logic circuit 230, and a drive circuit 240. The first sampling circuit 210 may sample a voltage of the first connection point P1 and output the voltage to the logic circuit 230. When it is determined that the voltage of the first connection point P1 is greater than the first threshold V1, the logic circuit 230 may output a first enable signal to the drive circuit 240 based on a received first drive signal output by the chip, where the first enable signal is a necessary condition for turning on the upper bridge arm switch Q1 of the first bridge arm TA. Alternatively, when it is determined that the voltage of the first connection point P1 is less than the second threshold V2, the logic circuit 230 may output a second enable signal to the drive circuit 240 based on a received second drive signal output by the chip, where the second enable signal is a necessary condition for turning on the lower bridge arm switch Q2 of the first bridge arm TA. After receiving the first enable signal, the drive circuit 240 may generate a first PWM signal PWM1 and output the first PWM signal to the upper bridge arm switch Q1 of the first bridge arm TA. After receiving the second enable signal, the drive circuit 240 may generate a second PWM signal PWM2 and output the second PWM signal to the lower bridge arm switch Q2 of the first bridge arm TA.

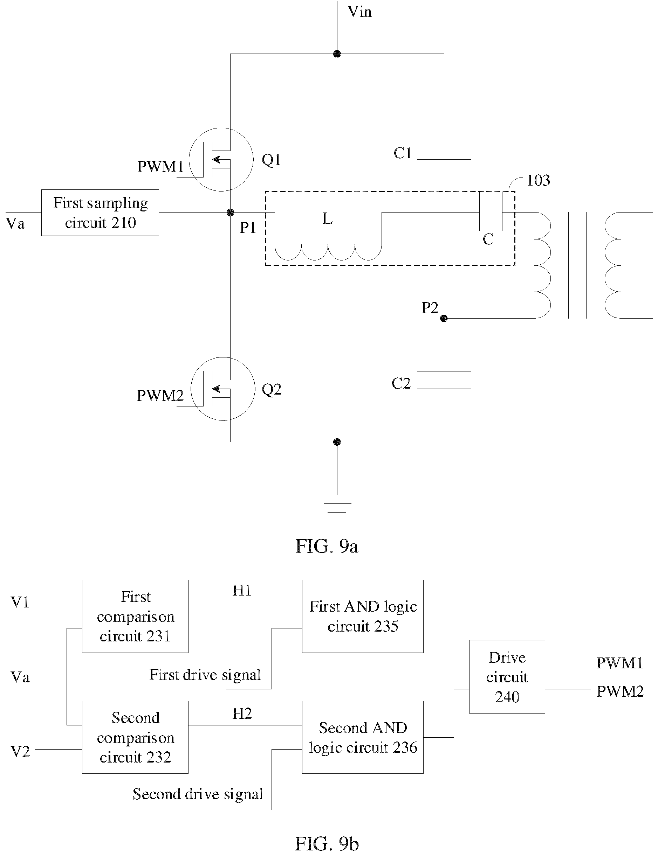

FIG. 9a is an example schematic of a specific circuit structure of a half-bridge circuit in a power conversion apparatus according to this application. Refer to FIG. 9a. In some embodiments of this application, the upper bridge arm switch Q1 and the lower bridge arm switch Q2 in the half-bridge circuit may each be implemented by using one switching transistor. In addition, in some other embodiments of this application, a resonance circuit 103 may be further disposed between the half-bridge circuit and the primary-side winding (or the secondary-side winding). The resonance circuit 103 may be coupled between a first end of the primary-side winding (or the secondary-side winding) and a first connection point P1, or the resonance circuit 103 may be coupled between a second end of the primary-side winding (or the secondary-side winding) and a second connection point P2. The resonance circuit 103 may include an inductor L, and the resonance circuit 103 may further include a capacitor C connected in series to the inductor L.

FIG. 9b is an example schematic of another specific circuit structure of a drive circuit in a power conversion apparatus according to this application. Refer to FIG. 9b. When the upper bridge arm switch Q1 and the lower bridge arm switch Q2 in the half-bridge circuit each are implemented by using one switching transistor, the logic circuit 230 may specifically include a first comparison circuit 231, a second comparison circuit 232, a first AND logic circuit 235, and a second AND logic circuit 236. The first comparison circuit 231 outputs a first high level signal H1 when it is determined that the voltage Va of the first connection point P1 is greater than the first threshold V1. The second comparison circuit 232 outputs a second high level signal H2 when it is determined that the voltage Va of the first connection point P1 is less than the second threshold V2. After receiving the first high level signal H1, the first AND logic circuit 235 may perform AND logic with the first drive signal output by the chip, to generate and output the first enable signal, so that the drive circuit 240 may generate the first PWM signal PWM1 after receiving the first enable signal, to drive the upper bridge arm switch Q1 of the first bridge arm TA. After receiving the second high level signal H2, the second AND logic circuit 236 may perform AND logic with the second drive signal output by the chip, to generate and output the second enable signal, so that the drive circuit 240 may generate the second PWM signal PWM2 after receiving the second enable signal, to drive the lower bridge arm switch Q2 of the first bridge arm TA.

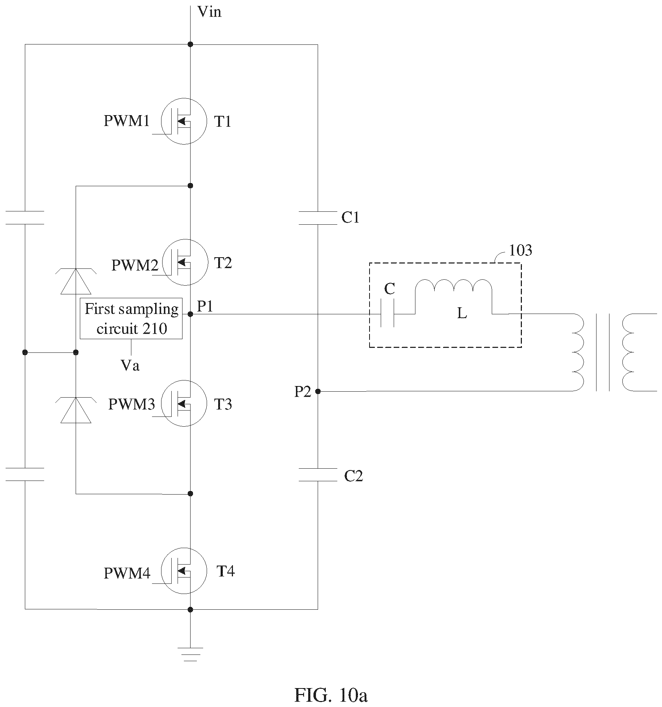

FIG. 10a is an example schematic of another specific circuit structure of a half-bridge circuit in a power conversion apparatus according to this application. Refer to FIG. 10a. In some other embodiments of this application, the upper bridge arm switch Q1 and the lower bridge arm switch Q2 in the half-bridge circuit may each be implemented by using two switching transistors, and form a three-level LLC circuit. Specifically, the upper bridge arm switch Q1 may include a first switching transistor T1 and a second switching transistor T2 that are connected in series, and the lower bridge arm switch Q2 may include a third switching transistor T3 and a fourth switching transistor T4 that are connected in series. The second switching transistor T2 is coupled between the first switching transistor T1 and the first connection point P1, and the third switching transistor T3 is coupled between the fourth switching transistor T4 and the first connection point P1.

If the upper bridge arm switch Q1 and the lower bridge arm switch Q2 in the half-bridge circuit each are implemented by using two switching transistors, when it is determined that the voltage of the first connection point P1 is greater than the first threshold V1, the logic circuit 230 may output a first enable signal to the drive circuit 240 based on a received first drive signal output by the chip, where the first enable signal is a necessary condition for turning on the first switching transistor T1; and output a second enable signal to the drive circuit 240 based on a received second drive signal output by the chip, where the second enable signal is a necessary condition for turning on the second switching transistor T2. Alternatively, when it is determined that the voltage of the first connection point P1 is less than the second threshold V2, the logic circuit 230 may output a third enable signal to the drive circuit 240 based on a received third drive signal output by the chip, where the third enable signal is a necessary condition for turning on the third switching transistor T3; and the WIR outputs a fourth enable signal to the drive circuit 240 based on a received fourth drive signal output by the chip, where the fourth enable signal is a necessary condition for turning on the fourth switching transistor T4. After receiving the first enable signal, the drive circuit 240 may generate a first PWM signal PWM1 and output the first PWM signal to the first switching transistor T1. After receiving the second enable signal, the drive circuit 240 may generate a second PWM signal 3 and output the second PWM signal to the third switching transistor T3. After receiving the fourth enable signal, the drive circuit 240 may generate a fourth PWM signal PWM4 and output the fourth PWM signal to the fourth switching transistor T4.

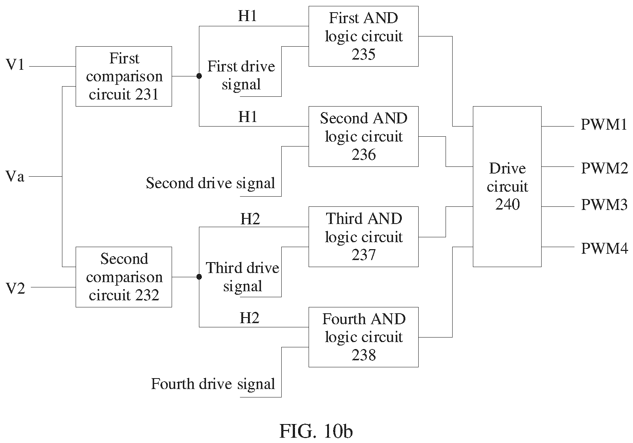

FIG. 10b is an example schematic of another specific circuit structure of a drive circuit in a power conversion apparatus according to this application. Refer to FIG. 10b. The logic circuit 230 may specifically include a first comparison circuit 231, a second comparison circuit 232, a first AND logic circuit 235, a second AND logic circuit 236, a third AND logic circuit 237, and a fourth AND logic circuit 238. The first comparison circuit 231 outputs a first high level signal H1 when it is determined that the voltage Va of the first connection point P1 is greater than the first threshold V1. The second comparison circuit 232 outputs a second high level signal H2 when it is determined that the voltage Va of the first connection point P1 is less than the second threshold V2.

After receiving the first high level signal H1, the first AND logic circuit 235 may perform AND logic with the first drive signal output by the chip, to generate and output the first enable signal, so that the drive circuit 240 may generate the first PWM signal PWM1 after receiving the first enable signal, to drive the first switching transistor T1. After receiving the first high level signal H1, the second AND logic circuit 236 may perform AND logic with the second drive signal output by the chip, to generate and output the second enable signal, so that the drive circuit 240 may generate the second PWM signal PWM2 after receiving the second enable signal, to drive the second switching transistor T2. After receiving the second high level signal H2, the third AND logic circuit 237 may perform AND logic with the third drive signal output by the chip, to generate and output the third enable signal, so that the drive circuit 240 may generate the third PWM signal PWM3 after receiving the third enable signal, to drive the third switching transistor T3. After receiving the second high level signal H2, the fourth AND logic circuit 238 may perform AND logic with the fourth drive signal output by the chip, to generate and output the fourth enable signal, so that the drive circuit 240 may generate the fourth PWM signal PWM4 after receiving the fourth enable signal, to drive the fourth switching transistor T4.

### Embodiment 3

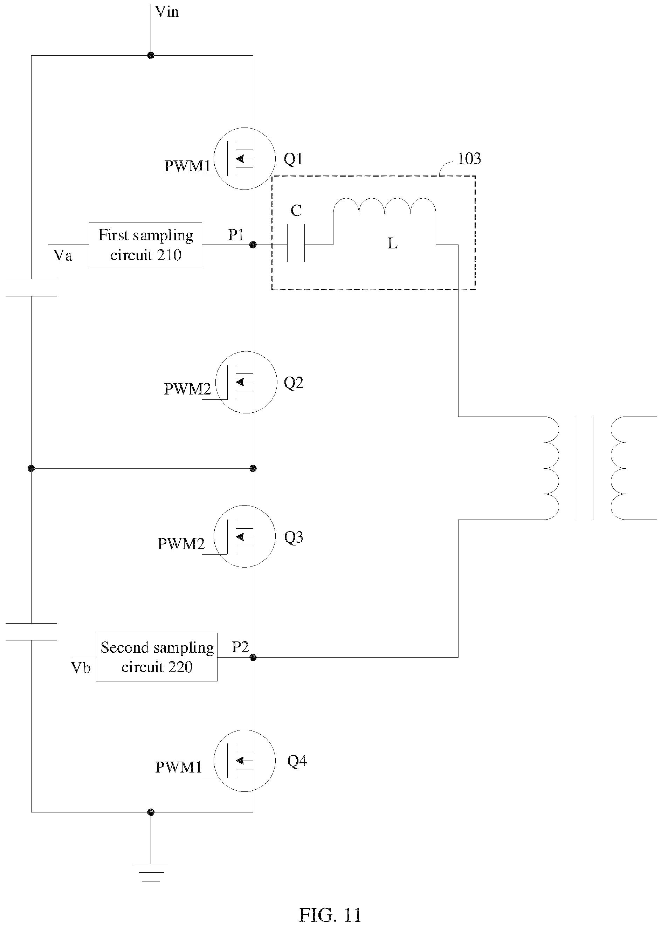

FIG. 11 is an example schematic of other specific circuit control of a three-level LLC circuit in a power conversion apparatus according to this application. Refer to FIG. 11. The three-level LLC circuit may include a first bridge arm TA and a second bridge arm TB that are connected in series. The first bridge arm TA may include an upper bridge arm switch Q1 and a lower bridge arm switch Q2 that are connected in series. A first connection point P1 between the upper bridge arm switch Q1 and the lower bridge arm switch Q2 may be referred to as a midpoint of the first bridge arm TA. The second bridge arm TB may include an upper bridge arm switch Q3 and a lower bridge arm switch Q4 that are connected in series. A second connection point P2 between the upper bridge arm switch Q3 and the lower bridge arm switch Q4 may be referred to as a midpoint of the second bridge arm TB. The upper bridge arm switch Q1 of the first bridge arm TA is connected to an input voltage terminal Vin, the lower bridge arm switch Q4 of the second bridge arm TB is grounded, and the lower bridge arm switch Q2 of the first bridge arm TA is connected to the upper bridge arm switch Q3 of the second bridge arm TB. When the secondary-side circuit 102 uses the foregoing three-level LLC circuit, a positive terminal BAT+ of the battery may be used as an input voltage terminal Vin, a negative terminal BAT- of the battery may be grounded, a first terminal of a secondary-side winding Sr is coupled to the midpoint of the first bridge arm TA, namely, the first connection point P1, and a second terminal of the secondary-side winding Sr is coupled to the midpoint of the second bridge arm TB, namely, the second connection point P2. When the primary-side circuit 101 uses the foregoing half-bridge circuit, a high-voltage positive input terminal HV+ may be used as an input voltage terminal Vin, a high-voltage negative input terminal HV- may be grounded, a first terminal of a primary-side winding Pr is coupled to the midpoint of the first bridge arm TA, namely, the first connection point P1, and a second terminal of the primary-side winding Pr is coupled to the midpoint of the second bridge arm TB, namely, the second connection point P2. In addition, a resonance circuit 103 may be further disposed between the full-bridge circuit and the primary-side winding (or the secondary-side winding). The resonance circuit 103 may be coupled between a first end of the primary-side winding (or the secondary-side winding) and a first connection point P1, or the resonance circuit 103 may be coupled between a second end of the primary-side winding (or the secondary-side winding) and a second connection point P2. The resonance circuit 103 may include an inductor L, and the resonance circuit 103 may further include a capacitor C connected in series to the inductor L.

The controller 200 may be coupled to the first bridge arm TA and the second bridge arm TB of the three-level LLC circuit. The controller 200 controls working modes of the upper bridge arm switch Q1 and the lower bridge arm switch Q2 of the first bridge arm TA based on a voltage of the first connection point P1 between the upper bridge arm switch Q1 and the lower bridge arm switch Q2 in the first bridge arm TA. The controller 200 controls turn-on/off of the upper bridge arm switch Q3 and the lower bridge arm switch Q4 of the second bridge arm TB based on a voltage of the second connection point P2 between the upper bridge arm switch Q3 and the lower bridge arm switch Q4 in the second bridge arm TB.

Specifically, the controller 200 may sample the voltages of the first connection point P1 and the second connection point P2. When it is determined that the voltage of the first connection point P1 is greater than the first threshold V1, the controller determines that the lower bridge arm switch Q2 of the first bridge arm TA is not short-circuited, and may control, based on a PWM drive signal sent by the control chip, the upper bridge arm switch Q1 of the first bridge arm TA to switch between being turned on and being turned off. To be specific, at a moment, the upper bridge arm switch Q1 of the first bridge arm TA is controlled to be turned on, and at a next moment, the upper bridge arm switch Q1 of the first bridge arm TA is controlled to be turned off. When it is determined that the voltage of the first connection point P1 is less than the second threshold V2, the controller determines that the upper bridge arm switch Q1 of the first bridge arm TA is not short-circuited, and may control, based on a PWM drive signal sent by the control chip, the lower bridge arm switch Q2 of the first bridge arm TA to switch between being turned on and being turned off. To be specific, at a moment, the lower bridge arm switch Q2 of the first bridge arm TA is controlled to be turned on, and at a next moment, the lower bridge arm switch Q2 of the first bridge arm TA is controlled to be turned off. When it is determined that the voltage of the second connection point P2 is greater than the third threshold V3, the controller determines that the lower bridge arm switch Q4 of the second bridge arm TB is not short-circuited, and may control, based on a PWM drive signal sent by the control chip, the upper bridge arm switch Q3 of the second bridge arm TB to switch between being turned on and being turned off. To be specific, at a moment, the upper bridge arm switch Q3 of the second bridge arm TB is controlled to be turned on, and at a next moment, the upper bridge arm switch Q3 of the second bridge arm TB is controlled to be turned off. When it is determined that the voltage of the second connection point P2 is less than the fourth threshold V4, the controller determines that the upper bridge arm switch Q3 of the second bridge arm TB is not short-circuited, and may control, based on a PWM drive signal sent by the control chip, the lower bridge arm switch Q4 of the second bridge arm TB to switch between being turned on and being turned off. To be specific, at a moment, the lower bridge arm switch Q4 of the second bridge arm TB is controlled to be turned on, and at a next moment, the lower bridge arm switch Q4 of the second bridge arm TB is controlled to be turned off. When it is determined that the voltage of the first connection point P1 is less than the first threshold V1, the controller determines that the lower bridge arm switch Q2 of the first bridge arm TA is short-circuited, and may control the upper bridge arm switch Q1 of the first bridge arm TA to be turned off, to avoid a possibility that bridge arm straight-through occurs. When it is determined that the voltage of the first connection point P1 is greater than the second threshold V2, the controller determines that the upper bridge arm switch Q1 of the first bridge arm TA is short-circuited, and may control the lower bridge arm switch Q2 of the first bridge arm TA to be turned off, to avoid a possibility that bridge arm straight-through occurs. When it is determined that the voltage of the second connection point P2 is less than the third threshold V3, the controller determines that the lower bridge arm switch Q4 of the second bridge arm TB is short-circuited, and may control the upper bridge arm switch Q3 of the second bridge arm TB to be turned off, to avoid a possibility that bridge arm straight-through occurs. When it is determined that the voltage of the second connection point P2 is greater than the fourth threshold V4, the controller determines that the upper bridge arm switch Q3 of the second bridge arm TB is short-circuited, and may control the lower bridge arm switch Q4 of the second bridge arm TB to be turned off, to avoid a possibility that bridge arm straight-through occurs. The first threshold V1, the second threshold V2, the third threshold V3, and the fourth threshold V4 may each be between 0 and Vin, in other words, 0<V1<Vin, 0<V2<Vin, 0<V3<Vin, and 0<V4<Vin.

The controller 200 may include a first sampling circuit 210, a second sampling circuit 220, a logic circuit 230, and a drive circuit 240. The first sampling circuit 210 may sample the voltage of the first connection point P1 and output the voltage to the logic circuit 230, and the second sampling circuit 220 may sample the voltage of the second connection point P2 and output the voltage to the logic circuit 230. When it is determined that the voltage of the first connection point P1 is greater than the first threshold V1, the logic circuit 230 may output a first enable signal to the drive circuit 240 based on a received first drive signal output by the chip, where the first enable signal is a necessary condition for turning on the upper bridge arm switch Q1 of the first bridge arm TA. Alternatively, when it is determined that the voltage of the first connection point P1 is less than the second threshold V2, the logic circuit 230 may output a second enable signal to the drive circuit 240 based on a received second drive signal output by the chip, where the second enable signal is a necessary condition for turning on the lower bridge arm switch Q2 of the first bridge arm TA. Alternatively, when it is determined that the voltage of the second connection point P2 is greater than the third threshold V3, the logic circuit 230 may output a third enable signal to the drive circuit 240 based on a received third drive signal output by the chip, where the third enable signal is a necessary condition for turning on the upper bridge arm switch Q3 of the second bridge arm TB. Alternatively, when it is determined that the voltage of the second connection point P2 is less than the fourth threshold V4, the logic circuit 230 may output a fourth enable signal to the drive circuit 240 based on a received fourth drive signal output by the chip, where the fourth enable signal is a necessary condition for turning on the lower bridge arm switch Q4 of the second bridge arm TB. After receiving the first enable signal, the drive circuit 240 may generate a first PWM signal PWM1 and output the first PWM signal to the upper bridge arm switch Q1 of the first bridge arm TA. After receiving the second enable signal, the drive circuit 240 may generate a second PWM signal PWM2 and output the second PWM signal to the lower bridge arm switch Q2 of the first bridge arm TA. After receiving the third enable signal, the drive circuit 240 may generate a third PWM signal PWM3 and output the third PWM signal to the upper bridge arm switch Q3 of the second bridge arm TB. After receiving the fourth enable signal, the drive circuit 240 may generate a fourth PWM signal PWM4 and output the fourth PWM signal to the lower bridge arm switch Q4 of the second bridge arm TB.

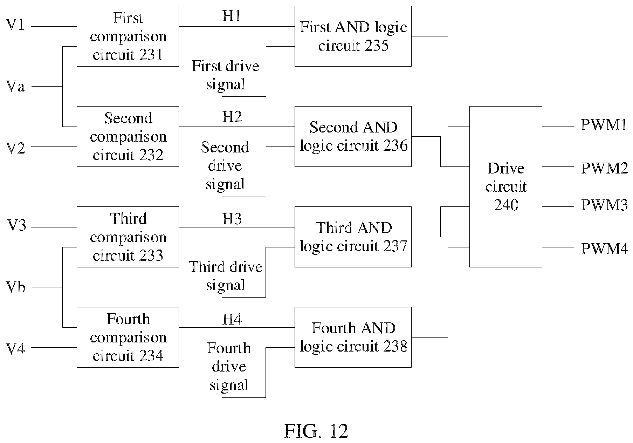

FIG. 12 is an example schematic of another specific circuit structure of a drive circuit in a power conversion apparatus according to this application. Refer to FIG. 12. The logic circuit 230 may specifically include a first comparison circuit 231, a second comparison circuit 232, a third comparison circuit 233, a fourth comparison circuit 234, a first AND logic circuit 235, a second AND logic circuit 236, a third AND logic circuit 237, and a fourth AND logic circuit 238. The first comparison circuit 231 outputs a first high level signal H1 when it is determined that the voltage Va of the first connection point P1 is greater than the first threshold V1. The second comparison circuit 232 outputs a second high level signal H2 when it is determined that the voltage Va of the first connection point P1 is less than the second threshold V2. The third comparison circuit 233 outputs a third high level signal H3 when it is determined that the voltage Vb of the second connection point P2 is greater than the third threshold V3. The fourth comparison circuit 234 outputs a fourth high level signal H4 when it is determined that the voltage Vb of the second connection point P2 is less than the fourth threshold V4. After receiving the first high level signal H1, the first AND logic circuit 235 may perform AND logic with the first drive signal output by the chip, to generate and output the first enable signal, so that the drive circuit 240 may generate the first PWM signal PWM1 after receiving the first enable signal, to drive the upper bridge arm switch Q1 of the first bridge arm TA. After receiving the second high level signal H2, the second AND logic circuit 236 may perform AND logic with the second drive signal output by the chip, to generate and output the second enable signal, so that the drive circuit 240 may generate the second PWM signal PWM2 after receiving the second enable signal, to drive the lower bridge arm switch Q2 of the first bridge arm TA. After receiving the third high level signal H3, the third AND logic circuit 237 may perform AND logic with the third drive signal output by the chip, to generate and output the third enable signal, so that the drive circuit 240 may generate the third PWM signal PWM3 after receiving the third enable signal, to drive the upper bridge arm switch Q3 of the second bridge arm TB. After receiving the fourth high level signal H4, the fourth AND logic circuit 238 may perform AND logic with the fourth drive signal output by the chip, to generate and output the fourth enable signal, so that the drive circuit 240 may generate the fourth PWM signal PWM4 after receiving the fourth enable signal, to drive the lower bridge arm switch Q4 of the second bridge arm TB.

It should be noted that the AND logic circuit mentioned in the foregoing several embodiments is a specific implementation of an enable output circuit, and the AND logic circuit may also be replaced with another enable output circuit.

Based on a same inventive concept, an embodiment of this application further provides an energy storage apparatus. The energy storage apparatus may include a BCU, a plurality of battery packs (the battery pack may be considered as the foregoing battery 300), and a plurality of power conversion apparatuses provided in the embodiments of this application. The plurality of battery packs are disposed in parallel, and each of the battery packs is connected to the BCU after being connected in series to one power conversion apparatus. The battery may be coupled to a secondary-side circuit in the power conversion apparatus. The controller in the power conversion apparatus may collect a voltage of a connection point between an upper bridge arm switch and a lower bridge arm switch in a bridge arm of the secondary-side circuit, and control working modes of the upper bridge arm switch and the lower bridge arm switch in the corresponding bridge arm based on the voltage of the connection point, to reduce a possibility that bridge arm straight-through occurs, and prevent a battery pack short-circuit.

Clearly, a person skilled in the art can make various modifications and variations to this application without departing from the scope of this application. This application is intended to cover these modifications and variations of this application provided that they fall within the scope of the claims of this application and an equivalent technology thereof.

## Claims

1. A power conversion apparatus, comprising a direct current-direct current DC-DC conversion circuit and a controller, wherein the DC-DC conversion circuit comprises a first bridge arm, and the first bridge arm comprises an upper bridge arm switch and a lower bridge arm switch that are connected in series; and
the controller is configured to:
control turn-on/off of the upper bridge arm switch and the lower bridge arm switch based on a voltage of a first connection point between the upper bridge arm switch and the lower bridge arm switch in the first bridge arm.

2. The apparatus according to claim 1, wherein the controller is configured to:
in response to that the voltage of the first connection point is less than a first threshold, control the upper bridge arm switch of the first bridge arm to be turned off; or
in response to that the voltage of the first connection point is greater than a second threshold, control the lower bridge arm switch of the first bridge arm to be turned off.

3. The apparatus according to claim 1 or 2, wherein the controller is configured to:
in response to that the voltage of the first connection point is greater than the first threshold, control the upper bridge arm switch of the first bridge arm to switch between being turned on and being turned off; or
in response to that the voltage of the first connection point is less than the second threshold, control the lower bridge arm switch of the first bridge arm to switch between being turned on and being turned off.

4. The apparatus according to claim 1, wherein the DC-DC conversion circuit further comprises a second bridge arm, the first bridge arm and the second bridge arm connect in parallel, and the second bridge arms comprises an upper bridge arm switch and a lower bridge arm switch that are connected in series; and
the controller is configured to:
control turn-on/off of the upper bridge arm switch and the lower bridge arm switch of the first bridge arm, and the upper bridge arm switch and the lower bridge arm switch of the second bridge arm based on a voltage of a first connection point between the upper bridge arm switch and the lower bridge arm switch in the first bridge arm and a voltage of a second connection point between the upper bridge arm switch and the lower bridge arm switch in the second bridge arm.

5. The apparatus according to claim 4, wherein the controller is configured to:
in response to that the voltage of the first connection point is less than a first threshold or the voltage of the second connection point is greater than a second threshold, control both the upper bridge arm switch of the first bridge arm and the lower bridge arm switch of the second bridge arm to be turned off; or
in response to that the voltage of the second connection point is less than a first threshold or the voltage of the first connection point is greater than a second threshold, control both the upper bridge arm switch of the second bridge arm and the lower bridge arm switch of the first bridge arm to be turned off.

6. The apparatus according to claim 4 or 5, wherein the controller is configured to:
in response to that the voltage of the first connection point is greater than the first threshold and the voltage of the second connection point is less than the second threshold, control the upper bridge arm switch of the first bridge arm and the lower bridge arm switch of the second bridge arm to be simultaneously turned on or turned off; or
in response to that the voltage of the second connection point is greater than the first threshold and the voltage of the first connection point is less than the second threshold, control the upper bridge arm switch of the second bridge arm and the lower bridge arm switch of the first bridge arm to be simultaneously turned on or turned off.

7. The apparatus according to claim 1, wherein the DC-DC conversion circuit further comprises a second bridge arm, the first bridge arm and the second bridge arm connect in series, and the second bridge arm comprises an upper bridge arm switch and a lower bridge arm switch that are connected in series; and
the controller is configured to:
control turn-on/off of the upper bridge arm switch and the lower bridge arm switch of the first bridge arm based on a voltage of a first connection point between the upper bridge arm switch and the lower bridge arm switch in the first bridge arm, and control turn-on/off of the upper bridge arm switch and the lower bridge arm switch of the second bridge arm based on a voltage of a second connection point between the upper bridge arm switch and the lower bridge arm switch in the second bridge arm.

8. The apparatus according to claim 7, wherein the controller is configured to:
in response to that the voltage of the first connection point is less than a first threshold, control the upper bridge arm switch of the first bridge arm to be turned off; or
in response to that the voltage of the first connection point is greater than a second threshold, control the lower bridge arm switch of the first bridge arm to be turned off.

9. The apparatus according to claim 7, wherein the controller is configured to:
in response to that the voltage of the second connection point is less than a third threshold, control the upper bridge arm switch of the second bridge arm to be turned off; or
in response to that the voltage of the second connection point is greater than a fourth threshold, control the lower bridge arm switch of the second bridge arm to be turned off.

10. The apparatus according to claim 7, wherein the controller is configured to:
in response to that the voltage of the first connection point is greater than the first threshold, control the upper bridge arm switch of the first bridge arm to be simultaneously turned on or turned off.

11. The apparatus according to claim 7, wherein the controller is configured to:
in response to that the voltage of the first connection point is less than the second threshold, control the lower bridge arm switch of the first bridge arm to be simultaneously turned on or turned off.

12. The apparatus according to claim 7, wherein the controller is configured to:
in response to that the voltage of the second connection point is greater than the third threshold, control the upper bridge arm switch of the second bridge arm to be simultaneously turned on or turned off.

13. The apparatus according to claim 7, wherein the controller is configured to:
in response to that the voltage of the second connection point is less than the fourth threshold, control the lower bridge arm switch of the second bridge arm to be simultaneously turned on or turned off.

14. An energy storage apparatus, comprising a battery control unit, a plurality of battery packs, and the power conversion apparatus according to any one of claims 1 to 13, wherein
the plurality of battery packs are disposed in parallel, and one of the plurality of battery packs is connected to the battery control unit after being connected to one of the plurality of power conversion apparatuses in series; and
the power conversion apparatus is the power conversion apparatus according to any one of claims 1 to 13, and the power conversion apparatus is configured to perform power conversion on electric energy input by the battery pack and then output, to the battery control unit, electric energy obtained after the conversion.
